Europäisches Patentamt

European Patent Office

Office européen des brevets

(19)

(11) Publication number: **0 067 723**
**A1**

(12) **EUROPEAN PATENT APPLICATION**

(21) Application number: **82303146.3**

(22) Date of filing: **17.06.82**

(51) Int. Cl.³: **B 60 R 9/04**

(30) Priority: **17.06.81 GB 8118570**
**12.03.82 GB 8207373**

(43) Date of publication of application:
**22.12.82 Bulletin 82/51**

(84) Designated Contracting States:
**BE DE FR GB IT NL SE**

(71) Applicant: **Williams, John Frederick**
**31 Shelford Park Avenue**
**Great Shelford Cambridgeshire(GB)**

(72) Inventor: **Williams, John Frederick**
**31 Shelford Park Avenue**
**Great Shelford Cambridgeshire(GB)**

(54) **Load support means for motor vehicles.**

(57) A car roof rack suitable for transporting bicycles comprises a fixed frame system (1, 3) and a telescopic frame system (4, 7) to carry the load which is pivotally connected to the first frame system (1, 3).

FIG 1

EP 0 067 723 A1

This invention relates to load support means for carrying objects such as bicycles on the roof of a motor vehicle.

Luggage roof racks for cars are widely used but loading heavy or cumbersome objects, such as bicycles, onto the racks can be difficult. Various proposals have been made to overcome this problem. Many of these, as for example in G.B. Patent Specification No. 2076347, involve a frame fixed to a car roof and a second frame, to carry the load, which is pivoted to the first frame and then slid along the fixed frame.

I have now devised a system which is simpler to operate, more convenient in use and easier to manufacture than many prior art devices.

According to the invention there is provided load support means for a motor vehicle which comprises a first frame system capable of being fixed to the roof of a motor vehicle and a second frame system adapted to carry a load, said second frame system being telescopic and being attached at one end of the first frame system by means of a fixed pivot, whereby the second frame system can rotate from a first position where the two frame systems lie within the same plane, to a second position where it is inclined to the plane of the first frame system and can be telescoped outwards to increase its length so that in use one end can rest on the ground, the telescopic section of the second frame system moving longitudinally in relation to the pivot.

Generally the second frame system comprises one frame pivoted to the first frame system and a second frame which carries the load which slides along the said first frame.

The first frame system is preferably also telescopic and generally consists of a frame fixable to the roof of a motor vehicle by any conventional means and a frame slidable along the fixed frame. The first frame system is then pivoted to this slidable frame.

The frames can be manufactured using conventional slide systems, preferably those comprising ball-bearings in a cage.

In an alternative arrangement the fixed frame system can be adapted to be fitted to a conventional car roof rack.

The invention is illustrated with reference to the accompanying drawings in which

Figure 1 is a perspective view of the support means in position on the roof of a car.

Figure 2 is a perspective view of an alternative version of the support means.

Figure 3 is a portion of the support means showing a bicycle in position, and

Figure 4 is a detail of the support means and

Figure 5 is a section along the line AA' in Figure 1.

Referring to the drawings:

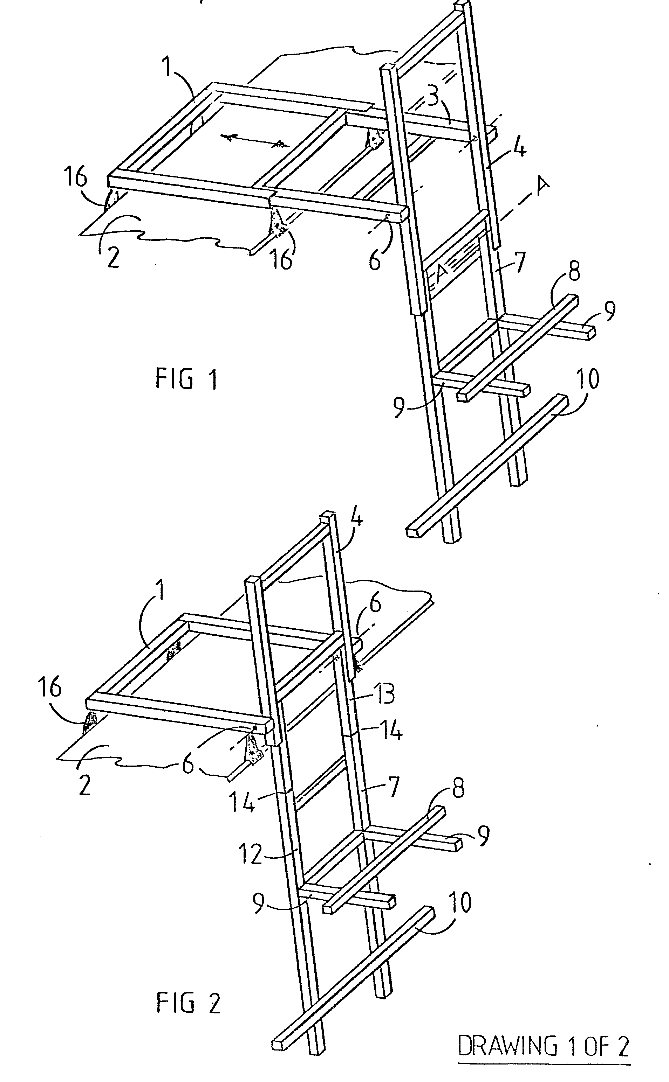

Figure 1 shows a rack 1 fixed to the roof 2 of a car by means of conventional fixings 16 which grip the roof gutter.

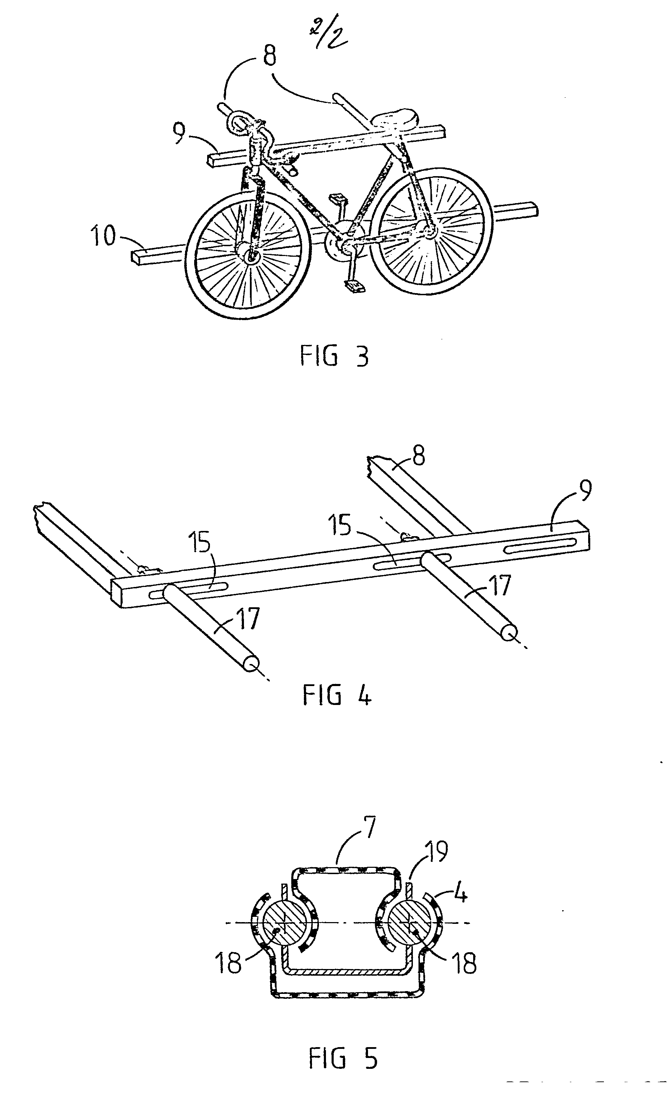

A frame 3 slides horizontally in the direction of the arrow within frame 1. At the end of frame 3 is attached a second frame 4 by means of pivots 5 and 6. Within frame 4 slides a third frame 7. A bar 8 is fixed to frame 7 via rods 9 which protrude beyond the bar 8. A bar 10 is fixed near the bottom of frame 7 and also constitutes a side of the frame. A bicycle can be attached to frame 7 by resting its cross bar over the rods 9 and resting its wheelsover bar 10 as shown in Figure 3. It can be fixed to the frame by conventional means such as straps or clips.

To load an object such as a bicycle onto a car, the object is fixed to frame 7 with it in the position shown in Figure 1. The bottom of frame 7 will rest on the ground. The frame 7 is slid upwards within frame 4 until the centre of gravity of the load plus these two frames is beyond pivots 5 and 6 whereby frames 4 and 7 can be easily tilted into a horizontal position, and lie within the plane of frame 3. Frame 3 is then slid within frame 1 and secured in place by suitable catch means (not shown).

The lenghts of the frames are chosen in relation to each other so that in these positions the frames do not protrude much beyond the side of the vehicle.

In an alternative arrangement shown in figure 2, frame 3 is omitted and frame 7 consists of two sections, 12 and 13, connected at 14. After loading with frames 4 and 7 horizontal and in the final fixed position, section 13 will protrude too far beyond the side of the car and can then be detached at point 14 until needed for unloading. Alternatively, this section can be hinged at 14 and fixed in an upright position.

Figure 4 shows a detail of a modified bar 8 and rod 9 arrangement. Rod 9 is adapted with elongated holes 15 which can take further bars 17. These can be moved along the holes 15 and secured by nuts to achieve the desired distance apart.

Figure 5 illustrates the means by which frame 7 slides within frame 4. Ball-bearings 18 in cage 19 permit easy sliding and contain frame 7 within frame 4.

If desired, the second frame system can be detached from the fixed frame system by undoing the pivots 5 and 6 so that the fixed frame system can be used as a conventional luggage rack.

## CLAIMS

1.    Load support means for a motor vehicle which comprises a first frame system capable of being fixed to the roof of a motor vehicle and a second frame system adapted to carry a load, said second frame system being telescopic and being attached at one end of the first frame system by means of a fixed pivot whereby the second frame system can rotate from a first position where the two frame systems lie within the same plane, to a second position where it is inclined to the plane of the first frame system and can be telescoped outwards to increase its length so that in use one end can rest on the ground, the telescopic section of the second frame system moving longitudinally in relation to the pivot.

2.    Load support means according to Claim 1 wherein the second frame system comprises a first frame pivoted to the first frame system and a second frame adapted to carry a load and which slides along said first frame.

3.    Load support means according to Claim 1 or 2 wherein the first frame system is telescopic.

4.    Load support means according to Claim 3 wherein the first frame system comprises a frame which is fixable to the roof of a motor vehicle and a second frame slidable along the fixed frame and to which the second frame system is pivoted.

1/2

FIG 1

FIG 2

2/2

FIG 3

FIG 4

FIG 5

0067723

European Patent Office

EUROPEAN SEARCH REPORT

Application number

EP 82 30 3146.3

## DOCUMENTS CONSIDERED TO BE RELEVANT

| Category | Citation of document with indication, where appropriate, of relevant passages | Relevant to claim |
|---|---|---|
| X,Y | US - A - 3 215 295 (F.B. SCHUYLER) <br> * fig. 3 * | 1-4 |
| X | FR - A - 1 333 935 (P. LEGRAND) <br> * fig. 3 to 5 * | 1,4 |
| Y | US - A - 4 260 314 (R.R. GOLZE) <br> * fig. 1 * | 3 |
| Y | US - A - 3 113 819 (N.J. BESSETTE) <br> * fig. 4 * | 3 |
| P,D, A | GB - A - 2 076 347 (J.R. SMITH) <br> ---- | |

**CLASSIFICATION OF THE APPLICATION (Int. Cl. 3)**

B 60 R 9/04

**TECHNICAL FIELDS SEARCHED (Int.Cl. 3)**

B 60 R 9/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 03-09-1982 | BECKER |

EPO Form 1503.1   06.78